# EUROPEAN PATENT APPLICATION

(11) **EP 2 942 983 A1**
(43) Date of publication of application: **11.11.2015**
(21) Application number: 13870302.0
(22) Date of filing: 05.12.2013
(51) Int. Cl.: H04W 4/00, H04W 8/24, H04W 88/18

(54) **MOBILE COMMUNICATION SYSTEM, SERVICE PLATFORM, NETWORK PARAMETER CONTROL METHOD, AND COMPUTER-READABLE MEDIUM**

(30) Priority: 07.01.2013 JP 2013000598
(71) Applicant: NEC Corporation, Tokyo 108-8001 (JP)
(72) Inventor: IWAI, Takanori, Tokyo 108-8001 (JP)
(74) Representative: Vossius & Partner Patentanwälte Rechtsanwälte mbB
(86) International application number: PCT/JP2013/007154
(87) International publication number: WO 2014/106877

(57) **Abstract**

An object is to provide a mobile communication system capable of optimizing network processing based on a change in a utilization characteristic. A mobile communication system according to the present invention includes a network operator device (12) disposed in a mobile communication network managed by a mobile communication carrier, and a service platform (13) that provides an application service to a mobile communication device (11), the mobile communication device being configured to perform communication through the mobile communication network. The service platform (13) transmits a characteristic change of the mobile communication device (11) related to an event notification transmitted from the mobile communication device (11) to the network operator device (12), and the network operator device (12) changes a network parameter associated with the mobile communication device (11) according to the characteristic change of the mobile communication device (11) transmitted from the service platform (13).

## Description

### Technical Field

The present invention relates to a mobile communication system that determines a control content based on an event content notified from a mobile communication device.

### Background Art

In recent years, a method for optimizing setting of each of the processing nodes forming a mobile communication system has been desired. In the 3GPP, a method for optimizing network processing according to the utilization characteristic of a mobile communication terminal has been proposed (Non-patent Literature 1). For example, network processing may be performed in such a manner that a control process related to a movement is reduced for a terminal that is fixedly installed in a certain place. Specifically, the interval at which the terminal performs a location registration may be set to a value longer than a specific time. Further, in the case where a mobile communication terminal is tolerant to a delay, network processing may be performed in such a manner that data is transmitted to the mobile terminal while controlling the communication time so as to avoid the timing at which the data transmission/reception amount peaks.

### Citation List

### Non Patent Literature

Non-patent Literature 1: 3GPP TS 22.368 V11.3.0 (2011-09) 3rd Generation Partnership Project; Technical Specification Group Services and System Aspects; Service requirements for Machine-Type Communications(MTC); Stage 1 (Release 11)

### Summary of Invention

### Technical Problem

However, as described above, the optimization of the network processing is performed for a mobile terminal whose utilization characteristic is unchanged. For example, whether a terminal is either a terminal fixedly installed in a certain place or a terminal that is tolerant to a delay or not is determined by using predefined service information or terminal information of the terminal. Presently, it has been desired to optimize, in addition to the above-described optimization of the network processing, network processing for a mobile terminal whose utilization characteristic changes. To that end, it has been desired to optimize network processing by using information other than the service information and the like which, in general, does not change frequently.

An object of the present invention is to provide a mobile communication system, a service platform, a network parameter control method, and a program capable of solving the above-described problem.

### Solution to Problem

A mobile communication system according to a first aspect of the present invention includes: a network operator device disposed in a mobile communication network managed by a mobile communication carrier; and a service platform that provides an application service to a mobile communication device, the mobile communication device being configured to perform communication through the mobile communication network, in which the service platform transmits a characteristic change of the mobile communication device to the network operator device, the characteristic change being related to an event notification transmitted from the mobile communication device, and the network operator device changes a network parameter associated with the mobile communication device according to the characteristic change of the mobile communication device transmitted from the service platform.

A service platform according to a second aspect of the present invention is a service platform that provides an application service to a mobile communication device connected to a mobile communication network managed by a mobile communication carrier, including: an event information acquisition unit that receives an event notification transmitted from the mobile communication device; and a characteristic change detection unit that transmits a characteristic change of the mobile communication device to a network operator device disposed in the mobile communication network, the characteristic change being related to the event notification transmitted from the mobile communication device.

A network operator device according to a third aspect of the present invention is a network operator device that communicates with a service platform, the service platform being configured to provide an application service to a mobile communication device connected to a mobile communication network managed by a mobile communication carrier, the network operator device including: a communication unit that receives a characteristic change of the mobile communication device from the service platform, the characteristic change being related to an event notification transmitted from the mobile communication device; and a network parameter control unit that changes a network parameter associated with the mobile communication device according to the characteristic change of the mobile communication device transmitted from the service platform.

A network parameter control method according to a fourth aspect of the present invention includes: receiving an event notification transmitted from a mobile communication device belonging to a mobile communication network managed by a mobile communication carrier; transmitting a characteristic change of the mobile communication device related to the event notification; and changing a network parameter associated with the mobile communication device according to the characteristic change of the mobile communication device.

A program according to a fifth aspect of the present invention is a program for execution by a computer that provides an application service to a mobile communication device connected to a mobile communication network managed by a mobile communication carrier, the program causing the computer to execute: a step for receiving an event notification transmitted from the communication device; and a step for transmitting a characteristic change of the mobile communication device to a network operator device disposed in the mobile communication network, the characteristic change being related to the event notification transmitted from the mobile communication device.

### Advantageous Effects of Invention

The present invention can provide a mobile communication system, a service platform, a network parameter control method, and a program capable of optimizing network processing based on a change in a utilization characteristic.

### Brief Description of Drawings

Fig. 1 is a configuration diagram of a mobile communication system according to a first exemplary embodiment;
Fig. 2 is a configuration diagram of a mobile communication system according to a second exemplary embodiment;
Fig. 3 is a table for explaining characteristic changes according to the second exemplary embodiment;
Fig. 4 is a configuration diagram of an M2M device according to the second exemplary embodiment;
Fig. 5 is a configuration diagram of an application server according to the second exemplary embodiment;
Fig. 6 is a configuration diagram of an M2M service PF according to the second exemplary embodiment;
Fig. 7 is a table for explaining a database in which event contents are associated with characteristic change contents according to the second exemplary embodiment;
Fig. 8 is a configuration diagram of a data transmission device according to the second exemplary embodiment;
Fig. 9 is a table for explaining a database in which characteristic change contents are associated with NW parameters according to the second exemplary embodiment;
Fig. 10 is a sequence diagram showing a NW parameter changing process flow according to the second exemplary embodiment;
Fig. 11 is a figure for explaining a Paging Area change according to the second exemplary embodiment;
Fig. 12 is a diagram for explaining an operation in which an M2M device periodically transmits information acquired from a sensor to an application server according to a third exemplary embodiment;
Fig. 13 is a sequence diagram showing a NW parameter changing process flow according to a fourth exemplary embodiment; and
Fig. 14 is a diagram for explaining a device that implements functions of a data transmission device according to a fifth exemplary embodiment.

### Description of Embodiments

### (First exemplary embodiment)

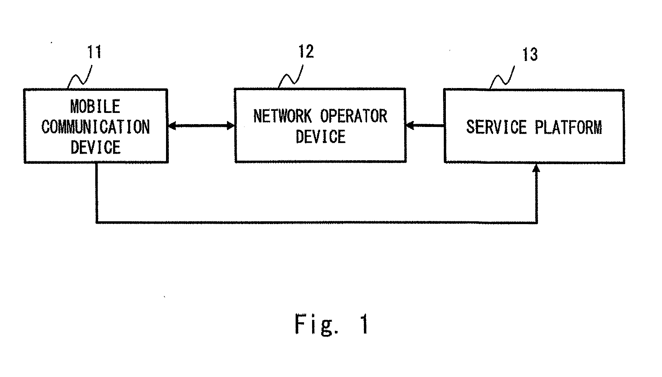

Exemplary embodiments according to the present invention are explained hereinafter with reference to the drawings. A configuration example of a mobile communication system according to a first exemplary embodiment of the present invention is explained with reference to Fig. 1. The mobile communication system shown in the figure includes a mobile communication device 11, a network operator device 12, and a service platform 13.

The mobile communication device 11 may be a mobile phone terminal, a smart phone terminal, a notebook personal computer, or the like, or may be moving means equipped with a communication function such as a car or an electric train equipped with a communication function. Alternatively, the mobile communication device 11 may be a gadget that is equipped with a communication function and worn by a user such as a watch equipped with a communication function. Alternatively, the mobile communication device 11 may be a device that is equipped with a communication function and rarely moved such as a vending machine and a household electrical appliance.

The service platform 13 provides an application service to the mobile communication device 11, which performs communication through a mobile communication network managed by a mobile communication carrier. Further, the service platform 13 transmits a characteristic change of the mobile communication device 11, which is related to an event notification transmitted from the mobile communication device 11, to the network operator device 12.

The mobile communication device 11 sends an event notification to the service platform 13 when, for example, the operation state, the communication state, or the movement state of the mobile communication device 11 itself, or data possessed by the mobile communication device 11, is changed. Specifically, in the case where the mobile communication device 11 is a car, the mobile communication device 11 may send an event notification to the service platform 13 when its engine is turned on or turned off. Information related to the movement of the mobile communication device 11 as described above may be referred to as "mobility information". Alternatively, when the mobile communication device 11 includes a sensor, the mobile communication device 11 may send information detected by the sensor to the service platform 13 as an event notification. Information that the mobile communication device 11 detects by using a sensor as described above may be referred to as "connectivity information".

The characteristic change is, for example, information indicating a change in a movement characteristic or a communication characteristic of the mobile communication device 11. The change in the movement characteristic may indicate that the mobile communication device 11 has changed from a moving state to a standstill state. Alternatively, the change in the movement characteristic may indicate that the mobile communication device 11 has changed from a high-speed moving state to a low-speed moving state. Note that the high-speed may be a speed in a state where the mobile communication device 11 is moving by a car or the like, and the low-speed may be a speed in a state where the mobile communication device 11 is moving on foot or the like Alternatively, a threshold for the speed may be defined in advance. Then, when the moving speed is higher than the threshold, the moving speed may be determined to be a high speed, whereas when the moving speed is lower than the threshold, the moving speed may be determined to be a low speed. Alternatively, the change in the movement characteristic may indicate that the mobile communication device 11 has changed from a frequently-moving state to a rarely-moving state. For the frequently-moving state and the rarely-moving state, when the number of movements is larger than a predetermined frequency, it may be determined that the mobile communication device 11 frequently moves, whereas when the number of movements is smaller than the predetermined frequency, it may be determined that the mobile communication device 11 rarely moves. Further, the change in the movement characteristic may be a change in the moving direction, the moving speed, and so on. Note that information indicating a movement characteristic may be referred to as "mobility state".

The change in the communication characteristic may indicate that the amount of data transmitted by the mobile communication device 11 is changed. Alternatively, the change in the communication characteristic may indicate that the communication band required by the mobile communication device 11 is changed. Alternatively, the change in the communication characteristic may indicate that the delay which the mobile communication device 11 is tolerant to is changed. Alternatively, the change in the communication characteristic may indicate that the interval at which the mobile communication device 11 performs communication is changed. Note that information indicating a communication characteristic may be referred to as "connectivity state".

The network operator device 12 is disposed in a mobile communication network managed by a mobile communication carrier. Further, the network operator device 12 changes a network parameter associated with the mobile communication device 11 according to a characteristic change of the mobile communication device 11 detected in the service platform 13. The network parameter may be information about an area where the mobile communication device 11 is called (or paged) when an incoming-call process for the mobile communication device 11 is performed. Alternatively, the network parameter may be information or the like about a timing at which the mobile communication device 11 is disconnected from the mobile communication network.

In general, information about an event notification of the mobile communication device 11 passes through the mobile communication network and is sent to an external device such as an application service provider. Therefore, the network operator device 12 cannot change a network parameter in response to an event notification of the mobile communication device 11.

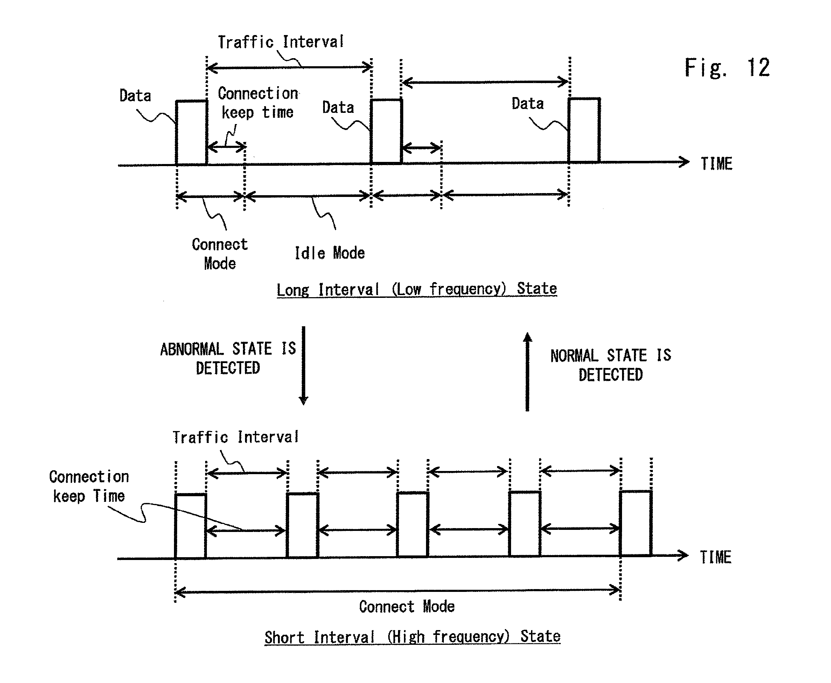

In contrast to this, by using the mobile communication system shown in Fig. 12, the network operator device 12 can acquire information about a characteristic change related to an event notification through the service platform 13. That is, the network operator device 12 can acquire information about characteristic changes related to various event notifications. Therefore, the network operator device 12 can set appropriate network parameters corresponding to various characteristic changes. As a result, for example, it is possible to achieve efficient use of resources in the mobile communication network.

### (Second exemplary embodiment)

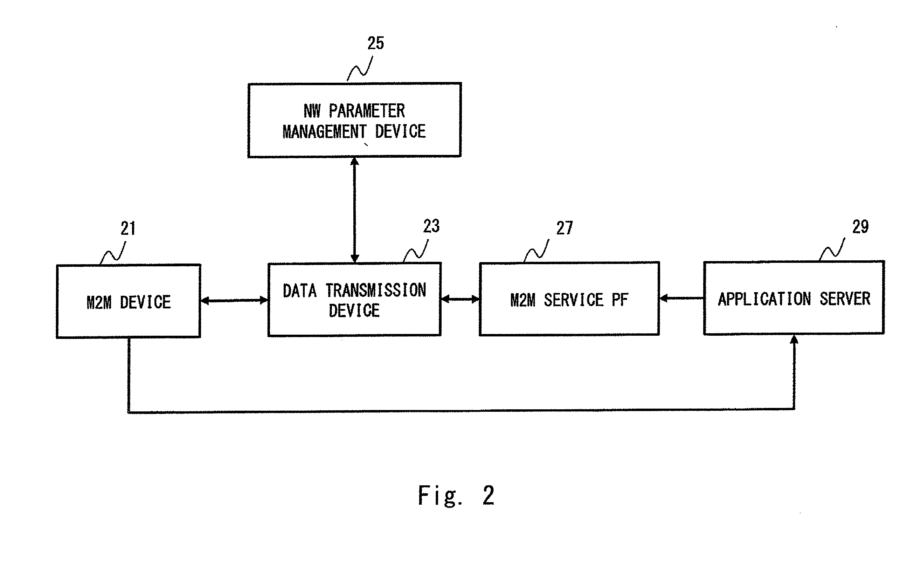

Next, a configuration example of a mobile communication system according to a second exemplary embodiment of the present invention is explained with reference to Fig. 2. In the following explanations, M2M (Machine to Machine) communication is mainly explained. However, the present invention can be applied not only to the M2M communication but also to general mobile communication and the like. The mobile communication system shown in the figure includes an M2M (Machine to Machine) device 21, a data transmission device 23, an NW (network) parameter management device 25, an M2M service PF (platform) 27, and an application server 29. Note that the M2M device 21 corresponds to the mobile communication device 11. The data transmission device 23 and the NW parameter management device 25 correspond to the network operator device 12. The M2M service PF 27 corresponds to the service platform 13.

The M2M device 21 is, for example, a device that autonomously transmits data between communication devices without requiring a user operation. For example, when the M2M device 21 is a car, the M2M device 21 may detect a state where its engine is turned on or turned off, and autonomously send the engine state as an event notification. The M2M device 21 sends the event notification to the application server 29.

The application server 29 is a device managed by an application service provider. Examples of the application service provider include a company or the like that provides an application service. Alternatively, the application service provider may be a business organization different from the mobile communication carrier. That is, the application server may be disposed in a network managed under a management policy different from that of the mobile communication network managed by the mobile communication carrier. The application server 29 receives an event notification transmitted from the M2M device 21 and transmits the received event notification to the M2M service PF 27.

The M2M service PF 27 is, for example, a group of devices managed by an M2M service provider. Therefore, the M2M service PF 27 may be formed by a plurality of server devices, or may be formed by one server device. The M2M service is, for example, a communication service using the M2M device 21 such as a communication service in which information or the like collected from the M2M device 21 is analyzed and an analysis result is reported to a user. The M2M service PF 27 detects a characteristic change of the M2M device 21 based on an event notification transmitted from the application server 29. Alternatively, the M2M service PF 27 predicts a characteristic change of the M2M device 21 based on an event notification transmitted from the application server 29. Further, the M2M service PF 27 may detect a characteristic change by analyzing the content of user data periodically transmitted between the M2M device 21 and the application server 29 in addition to the event notification transmitted from the M2M device 21 or the application server 29.

Further, the M2M service provider may be a business organization different from both the mobile communication carrier and the application service provider. That is, the application server may be disposed in a network managed under a management policy different from those of the networks managed by the mobile communication carrier and the application service provider. Further, the M2M service PF 27 may be disposed in a network managed under a management policy different from those of the networks managed by the application service provider and the mobile communication carrier. Alternatively, the M2M service provider may be the same business organization as the application service provider, and the M2M service PF 27 and the application server 29 may be disposed in a network managed under the same management policy. Alternatively, the M2M service provider may be the same business organization as the mobile communication carrier, and the M2M service PF 27 and the data transmission device 23 may be disposed in a network managed under the same management policy. Alternatively, the M2M service provider, the mobile communication carrier, and the application service provider are the same business organization, and the M2M service PF 27, the application server 29, and the data transmission device 23 may be disposed in a network managed under the same management policy.

The data transmission device 23 relays data transmitted/received between the M2M device 21 and the M2M service PF 27. The data transmission device 23 is disposed in the mobile communication network managed by the mobile communication carrier.

The NW parameter management device 25 manages NW parameters that are necessary to allow the M2M device 21 to perform data communication through the data transmission device 23. For example, the NW parameter management device 25 manages a Paging Area for specifying an area where the M2M device 21 is called (or paged) when an incoming-call process is performed for the M2M device 21. Further, the NW parameter management device 25 manages a Tracking Area for specifying an area where the M2M device 21 performs a location registration. Further, the NW parameter management device 25 manages a Tracking Area Update Timer, which is a period (location registration period) for registering or updating a calling area. Further, the NW parameter management device 25 manages an Inactivity Timer, an idle (dormant) Timer or a Connection keep time for specifying a timing at which the M2M device 21 is changed from a state where the M2M device 21 is connected to the data transmission device 23 (Connect Mode) to a state where the M2M device 21 is disconnected from the data transmission device 23 (Idle Mode). Further, the NW parameter management device 25 manages a radio reception interval or a DRX (discontinuous reception) timer for specifying a data receiving timing in the M2M device 21. Further, the NW parameter management device 25 manages a Backoff Timer used to reduce congestion in the mobile communication network.

An adjustment of the Inactivity Timer is explained, for example, in 3GPP TR 23.887 V0.6.0 (2012-12) 3rd Generation Partnership Project; Technical Specification Group Services and System Aspects; Machine-Type and other Mobile Data Applications Communications Enhancements (Release 12).

The data transmission device 23 changes a NW parameter related to the M2M device 21 managed in the NW parameter management device 25 according to a characteristic change of the M2M device 21 notified from the M2M service PF 27.

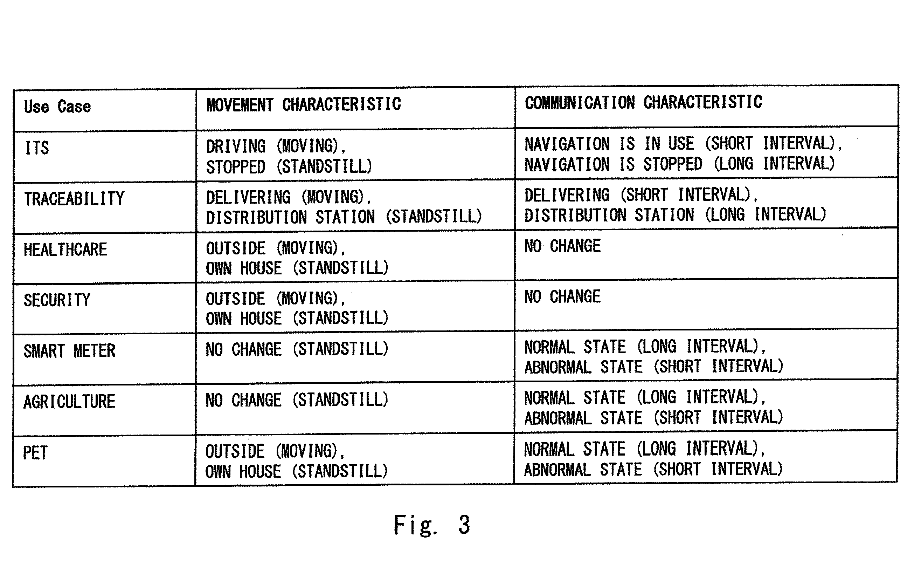

A specific M2M service and an example of characteristic changes according to the second exemplary embodiment of the present invention are explained hereinafter with reference to Fig. 3. For example, in an ITS (Intelligent Transport System), when the engine of a car is turned on and an event indicating that the car is in a driving state is notified, the M2M service PF 27 detects that the car is in a moving state, i.e., detects a movement characteristic change indicating that the car is in a moving state. Further, when the engine of the car is turned off and an event indicating that the car is in a sopped state is notified, the M2M service PF 27 detects that the car is in a standstill state, i.e., detects a movement characteristic change indicating that the car is in an unmoving state. Further, when a navigation system of the car is started up and an event indicating that the navigation system is in use is notified, the M2M service PF 27 detects a communication characteristic change indicating that the communication interval is short. Further, when the navigation system of the car is stopped and an event indicating that the navigation system is not in use is notified, the M2M service PF 27 detects a communication characteristic change indicating that the communication interval is long.

In traceability for tracing the distribution channel of an article, when the engine of the car is turned on and an event indicating that the car is in a delivering state is notified, the M2M service PF 27 detects that the car is in a moving state, i.e., detects a movement characteristic change indicating that the car is in a moving state. Further, when the engine of the car is turned off and an event indicating that the car is stopped in a distribution station is notified, the M2M service PF 27 detects that the car is in a standstill state, i.e., detects a movement characteristic change indicating that the car is in an unmoving state. Further, when an event indicating that the car is in a delivering state is notified, the M2M service PF 27 detects a communication characteristic change indicating that the communication interval is short. Further, when an event indicating that the car is stopped in a distribution station is notified, the M2M service PF 27 detects a communication characteristic change indicating that the communication interval is long.

When an event indicating that the location of a terminal, a device, or the like related to healthcare or security is outside its own house is notified, the M2M service PF 27 detects a movement characteristic change indicating that the terminal, the device, or the like is in a moving state. Further, when an event indicating that the location of a terminal, a device, or the like related to healthcare or security is in its own house is notified, the M2M service PF 27 detects a movement characteristic change indicating that the terminal, the device, or the like is in an unmoving state. Note that the M2M device 21 may transmit GPS data to the M2M service PF 27 or the application server 29 as location information.

When an event indicating that an electric power value monitored by using a smart meter is abnormal is notified, the M2M service PF 27 detects a communication characteristic change indicating that the communication interval of the smart meter is short because the smart meter frequently reports the electric power value. Further, when an event indicating that an electric power value monitored by using a smart meter is normal is notified, the M2M service PF 27 detects a communication characteristic change indicating that the communication interval of the smart meter is long because the smart meter reports the electric power value at regular intervals. Communication characteristic changes similar to those for the smart meter may also be used for temperatures and the like measured in monitoring devices and the like used in the agricultural field.

In the case where a pet is monitored by attaching a communication device to the pet, when an event indicating that the pet is outside its own house is notified, the M2M service PF 27 detects a movement characteristic change indicating that the pet is in a moving state. Further, when an event indicating that the pet is in its own house is notified, the M2M service PF 27 detects a movement characteristic change indicating that the pet is in an unmoving state. Further, in the case where a health condition of a pet is monitored by attaching a communication device having a sensor function of detecting a heat rate, a body temperature, or the like to the pet, when an event indicating that a value notified by the sensor is abnormal is notified, the M2M service PF 27 detects a communication characteristic change indicating that the communication interval is short because the condition of the pet needs to be frequently monitored. Further, when an event indicating that a value notified by a sensor is normal is notified, the M2M service PF 27 detects a communication characteristic change indicating that the communication interval is long because the condition of the pet may be monitored at regular intervals.

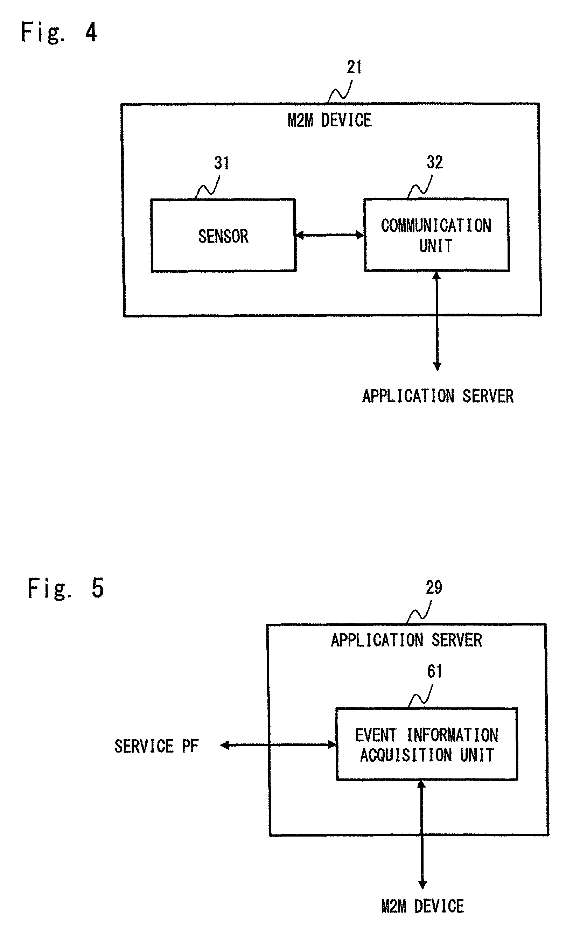

Next, a configuration example of the M2M device 21 according to the second exemplary embodiment of the present invention is explained with reference to Fig. 4. The M2M device 21 includes a sensor 31 and a communication unit 32. The function of the sensor 31 in an example case where the M2M device 21 is a car such as an ordinary car, a truck, or a taxicab is explained. In this case, the sensor 31 detects On/Off information of an engine and On/Off information of a navigation system. Further, the sensor 31 may collect GPS data. The sensor 31 outputs detected or collected information to the communication unit 32.

The communication unit 32 transmits the information output from the sensor 31 to the application server 29 as an event notification. The communication unit 32 may transmit the event notification to the application server 29 through a radio channel provided by a mobile communication carrier, or transmit the event notification to the application server 29 through a wireless LAN (Local Area Network) and the Internet.

Next, a configuration example of the application server 29 according to the second exemplary embodiment of the present invention is explained with reference to Fig. 5. The application server 29 includes an event information acquisition unit 61. The event information acquisition unit 61 receives an event notification from the M2M device 21. Further, the event information acquisition unit 61 transmits the received event notification to the M2M service PF 27.

Note that the application server 29 may be managed by a traffic center, a truck transportation company, a taxicab company, or the like in order to transmit/receive event notifications related to cars. Alternatively, the application server 29 may be a server that manages agricultural information or electricity information, a server that manages a pet, or the like in order to transmit/receive event notifications related to sensor information.

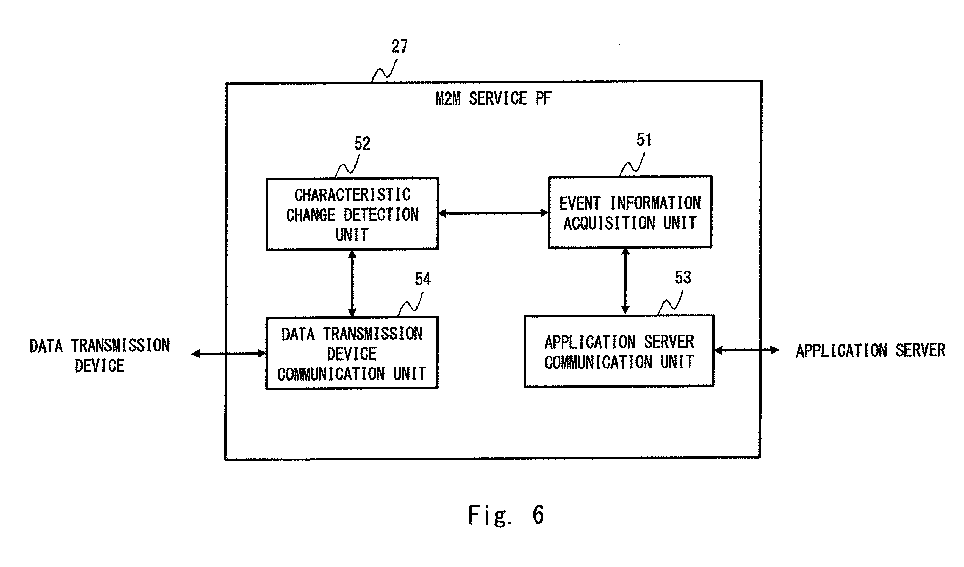

Next, a configuration example of the M2M service PF 27 according to the second exemplary embodiment of the present invention is explained with reference to Fig. 6. The M2M service PF 27 includes an event information acquisition unit 51, a characteristic change detection unit 52, an application server communication unit 53, and a data transmission device communication unit 54. The application server communication unit 53 communicates with the application server 29. The application server communication unit 53 receives an event notification from the application server 29 and outputs the received event notification to the event information acquisition unit 51. The event information acquisition unit 51 outputs the received event notification to the characteristic change detection unit 52.

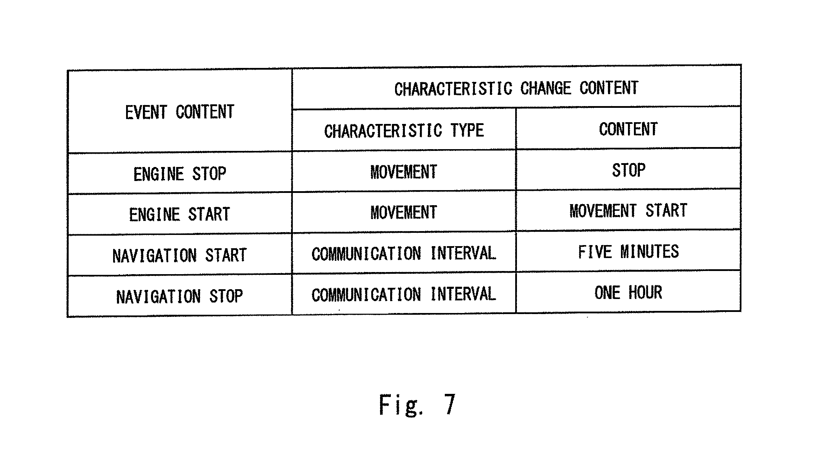

Upon receiving the event notification from the event information acquisition unit 51, the characteristic change detection unit 52 detects a characteristic change according to the event notification. For example, the characteristic change detection unit 52 may detect a characteristic change by using a database shown in Fig. 7 in which event contents are associated with characteristic change contents. A configuration example of the database shown in Fig. 7 is explained hereinafter.

The database shown in Fig. 7 manages information about notified event contents and information about characteristic change contents while associating them with each other. Further, the characteristic change contents are classified into characteristic types and characteristic contents corresponding to the characteristic types. For example, the event contents include an engine stop, an engine start, a navigation start, and a navigation stop. For the engine stop, which is one of the event contents, a movement and a stop are associated with as the characteristic type and the content, respectively, as characteristic changes. That is, when an event indicating that the engine is stopped is notified from the M2M device 21, the M2M service PF 27 detects that the movement of the M2M device 21 is stopped. When an event indicating that the engine is started is notified from the M2M device 21, the M2M service PF 27 detects that the M2M device 21 starts moving. Note that the stop of the movement may be referred to as a "Low Mobility" state or a "No mobility" state. Further, the start of the movement may be referred to as a "High Mobility" state.

Further, when an event indicating that the navigation system is started is notified from the M2M device 21, the M2M service PF 27 detects that the communication interval such as an interval between information distributions to the navigation system is five minutes. When an event indicating that the navigation system is stopped is notified from the M2M device 21, the M2M service PF 27 detects that the communication interval such as the interval between information distributions to the navigation system is one hour. The aforementioned time periods for the information distribution interval are merely examples and can be changed.

The characteristic change detection unit 52 outputs information about a detected characteristic change to the data transmission device communication unit 54. The data transmission device communication unit 54 communicates with the data transmission device 23. The data transmission device communication unit 54 transmits the information about the detected characteristic change output from the characteristic change detection unit 52 to the data transmission device 23.

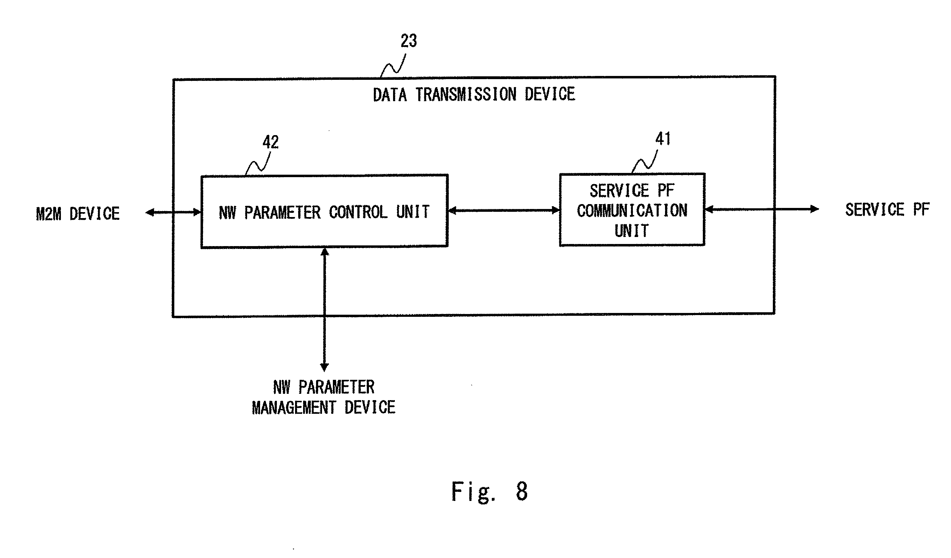

Next, a configuration example of the data transmission device 23 according to the second exemplary embodiment of the present invention is explained with reference to Fig. 8. The data transmission device 23 includes a service PF communication unit 41 and a NW parameter control unit 42. The service PF communication unit 41 receives information about a characteristic change from the M2M service PF 27. The service PF communication unit 41 outputs the received information about the characteristic change to the NW parameter control unit 42.

The NW parameter control unit 42 instructs the NW parameter management device 25 to change a NW parameter related to the M2M device 21 based on the characteristic change of the M2M device 21.

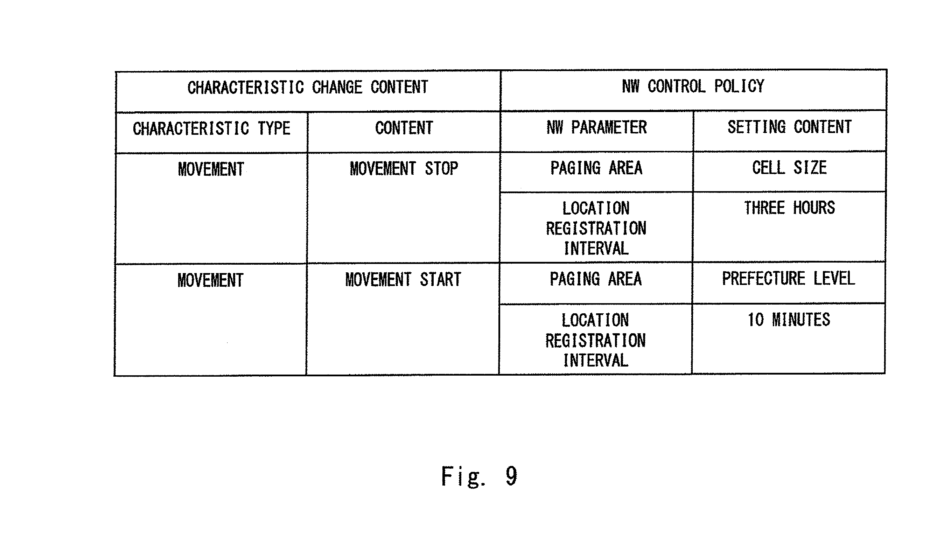

Note that the NW parameter control unit 42 may specify the NW parameter by using a database shown in Fig. 9 in which characteristic change contents are associated with NW parameters. A configuration example of the database shown in Fig. 9 is explained hereinafter.

The database shown in Fig. 9 manages information about characteristic change contents and information about NW control policies while associating them with each other. The information about characteristic change contents are similar to those stored in the database shown in Fig. 7. The information related to NW control policies are classified into NW parameters and setting contents.

For example, when information of a movement and a movement stop is notified as a characteristic type and a characteristic change content, respectively, from the M2M service PF 27, the NW parameter control unit 42 may determine a NW control policy indicating that the size of a paging area related to the M2M device 21 should be set to a cell size managed by one base station, and determine that the location registration interval (Tracking Area Update Timer) of the M2M device 21 is every three hours. Further, when information of a movement and a movement start is notified as a characteristic type and a characteristic change content, respectively, from the M2M service PF 27, the NW parameter control unit 42 may determine a NW control policy indicating that the size of a paging area related to the M2M device 21 should be set to a size on a prefecture basis, and determine that the location registration interval of the M2M device 21 is every 10 minutes.

That is, when the M2M device 21 stops moving, its moving range becomes smaller. Therefore, its paging area can also be set to a smaller area. As a result, a cell area formed by only one base station can be defined as the paging area. In contrast to this, when the M2M device 21 starts moving, its moving range widens. Therefore, it is necessary to widen the paging area in order to reliably call (or page) the M2M device 21. Therefore, for example, a cell area formed by all the base stations located in the same prefecture (i.e., one prefecture) may be defined as the paging area. Further, when the M2M device 21 stops moving, there is a high possibility that the M2M device 21 is located in the same location registration area (i.e., one location registration area) and hence the location registration interval may be set to a large value. Further, when the M2M device 21 starts moving, there is a high possibility that the M2M device 21 is located in different location registration areas over time and hence the location registration interval may be set to a small value.

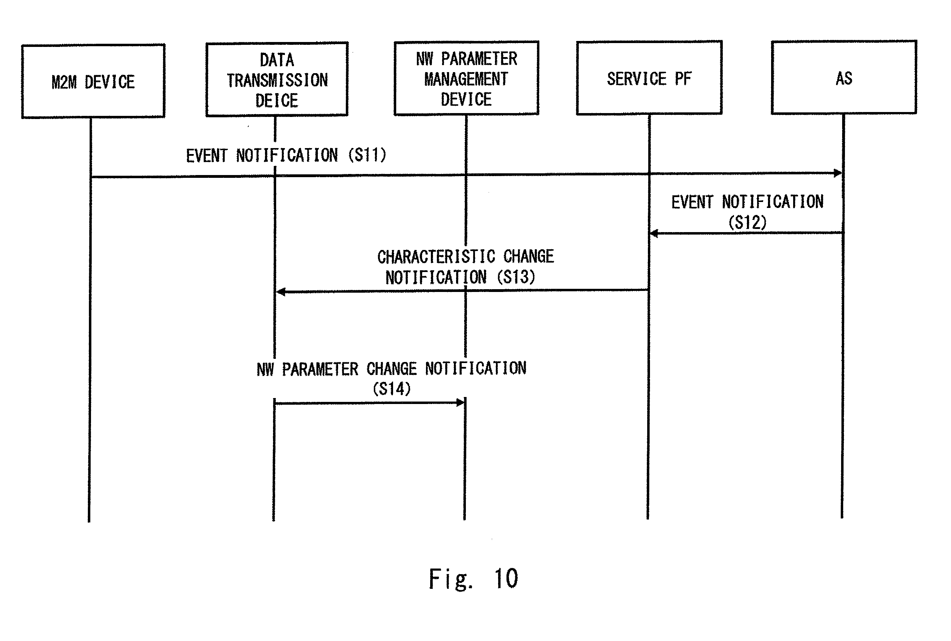

Next, a NW parameter changing process flow according to the second exemplary embodiment of the present invention is explained with reference to Fig. 10. Firstly, the M2M device 21 transmits an event notification massage to the application server (AS) 29 (S11). Note that the event notification message may be referred to as "mobility information". For example, the M2M device 21 sets information indicating engine-On or engine-Off as an event notification massage and transmits the event notification message to the application server 29.

Next, the application server 29 transmits the event notification message transmitted from the M2M device 21 to the M2M service PF 27 (S 12). Next, the M2M service PF 27 transmits a characteristic change notification message to the data transmission device 23 in order to notify the data transmission device 23 of a characteristic change detected based on the transmitted event notification. The characteristic change notification message may be referred to as "mobility state". For example, when information indicating engine-On is set in the event notification message, the M2M service PF 27 sets a moving state, High Mobility, or a normal state as a movement characteristic and transmits the characteristic change message. Alternatively, when information indicating engine-Off is set in the event notification message, the M2M service PF 27 sets Low Mobility or No Mobility as a movement characteristic and transmits the characteristic change message.

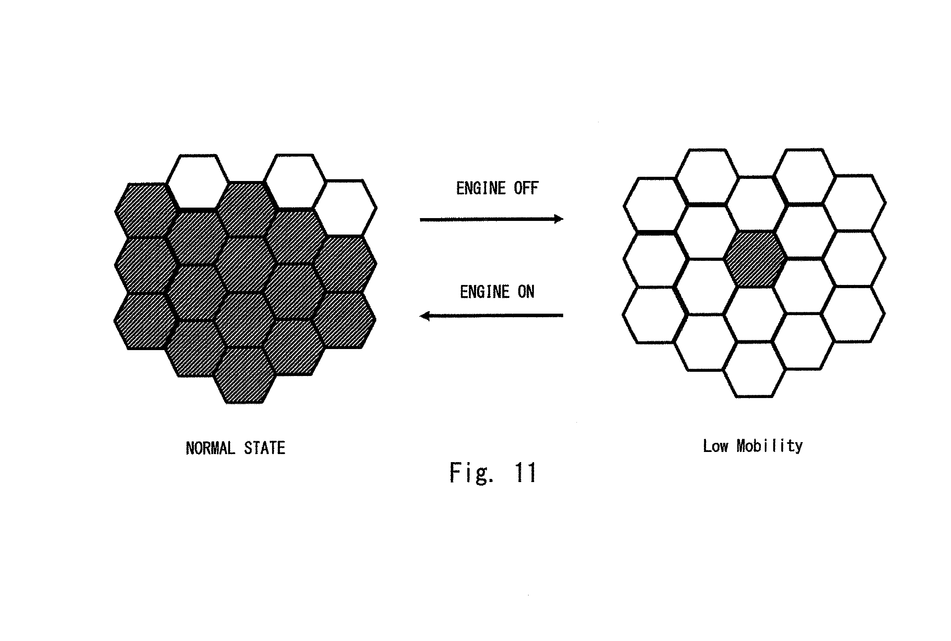

Next, the data transmission device 23 transmits a NW parameter change notification message to the NW parameter management device 25 based on the characteristic change message transmitted from the M2M service PF 27. A NW parameter to be changed is explained hereinafter with reference to Fig. 11. In Fig. 11, explanations are given while using a Paging Area as a NW parameter. When the data transmission device 23 is notified of information indicating that the M2M device 21 is in Low Mobility or No Mobility from the M2M service PF 27, the data transmission device 23 notifies the NW parameter management device 25 that the Paging Area should be set to a cell to which the M2M device 21 has connected the last time (the shaded part in the Low Mobility in Fig. 11). Further, when the data transmission device 23 is notified of information indicating that the M2M device 21 is in a normal state or High Mobility from the M2M service PF 27, the data transmission device 23 notifies the NW parameter management device 25 that the Paging Area should be set to cells registered in a Tracking Area List (the shaded part in the normal state in Fig. 11). The Tracking Area List is a list including a plurality of cells that are defined in advance as cells where the M2M device 21 is called (or paged). As can be seen from Fig. 11, the Paging Area in the normal state or the like is wider than that in the Low Mobility or the like.

As explained above, by using the mobile communication system according to the second exemplary embodiment of the present invention, an appropriate NW parameter that is applied to the data transmission device 23 can be set based on information about a characteristic change of the M2M device 21 notified from the M2M service PF 27 even in a system for providing an M2M service as in the case of the first exemplary embodiment.

### (Third exemplary embodiment)

Next, a NW parameter changing process flow in a case where the M2M device 21 periodically transmits information acquired from a sensor to the application server 29 as shown in Fig. 12 is explained.

Fig. 12 shows intervals at which the M2M device 21 transmits data. A Traffic Interval that indicates a data transmission interval in a Long Interval state or a Low frequency state is longer than that in a Short Interval state or a High frequency state. Further, in the Long Interval state, the connection between the M2M device 21 and the data transmission device 23 is maintained for a certain period M2 after the M2M device 21 starts transmitting data. This period is referred to as "Connect Mode". Further, the period in which the M2M device 21 is not connected with the data transmission device 23 is referred to as "Idle Mode". Further, the period from when the data transmission has been completed to when the M2M device 21 changes from the Connect Mode to the Idle Mode is referred to as "Inactivity Timer" or "Connection keep time". A NW parameter changing process flow is explained hereinafter with reference to Fig. 10. The following explanations of Fig. 10 are given while explaining Fig. 12 as appropriate.

Firstly, the M2M device 21 transmits an event notification message in which whether information acquired by using a sensor is in a normal state or an abnormal state is set to the application server 29 (S11). Note that the M2M device 21 may include a sensor related to agriculture (e.g., a temperature sensor), a smart grid, a sensor for monitoring a pet, or the like. The abnormal state means, for example, a state where a value of radioactivity, a temperature, vibrations, or the like acquired by using the sensor exceeds a reference value. The normal state means a state where the value of radioactivity, a temperature, vibrations, or the like acquired by using the sensor does not exceed the reference value.

Next, the application server 29 transmits the event notification message to the M2M service PF 27 (S12). Next, when a normal state is set in the event notification message, the M2M service PF 27 sets a Long Interval state as a communication characteristic and transmits the characteristic change notification message to the data transmission device 23 (S13). Further, when an abnormal state is set in the event notification message, the M2M service PF 27 sets a Short Interval state as a communication characteristic and transmits the characteristic change notification message to the data transmission device 23 (S13).

Next, when the Long Interval state is set in the characteristic change notification message, the data transmission device 23 notifies the NW parameter management device 25 that a Short connect mode should be set to the Connection keep time in order to set the connected state of the M2M device 21 to the data transmission device 23 to a small value (S14). Further, when the Song Interval state is set in the characteristic change notification message, the data transmission device 23 notifies the NW parameter management device 25 that a Long connect mode should be set to the Connection keep time in order to set the connected state of the M2M device 21 to the data transmission device 23 to a large value (S14). Note that the Connection keep time in which the Long connect mode is set is longer than the Connection keep time in which the Short connect mode is set

As explained above, the Connection keep time is changed according to whether the information acquired by using the sensor indicates a normal state or an abnormal state. By doing so, the time during which the Idle Mode is set is increased in the Long Interval state, thus making it possible to reduce the power consumption of the M2M device 21. Further, in the Short Interval state, since the Traffic Interval is short, the time during which the Idle Mode is set is eliminated (or omitted). As a result, the M2M device 21 can reduce the number of switching operations between the Connect Mode and the Idle Mode, thus making it possible to simplify its control operation.

### (Fourth exemplary embodiment)

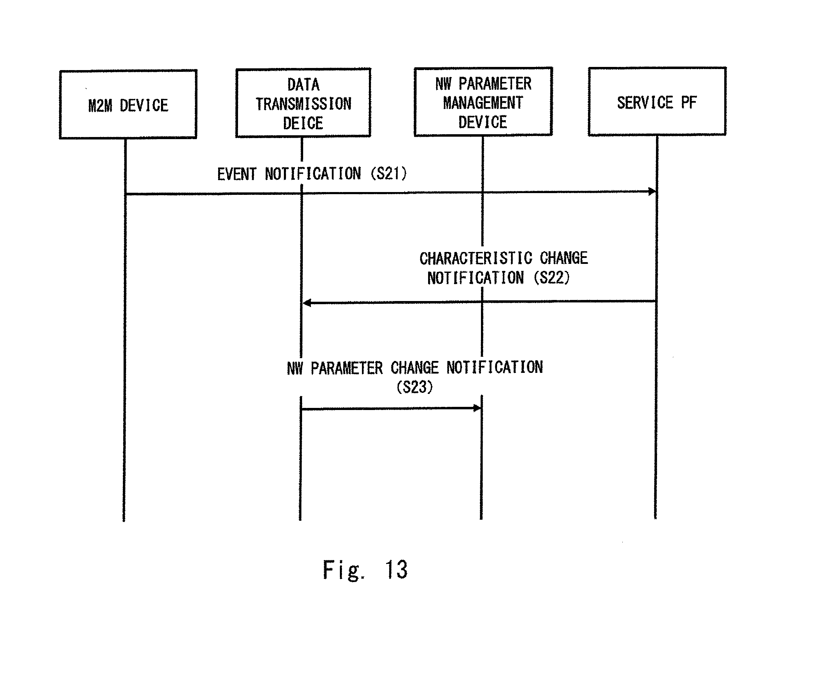

Next, a NW parameter setting process flow according to a fourth exemplary embodiment is explained with reference to Fig. 13. Firstly, the M2M device 21 transmits an event notification massage to the application server 29 (S21). Steps S22 and S23 are similar to the steps S13 and S14 in Fig. 10, and therefore their detailed explanations are omitted.

In Fig. 10, the M2M service PF 27 acquires an event notification message through the application server 29. In contrast to this, in Fig. 13, the M2M service PF 27 acquires an event notification message directly from the M2M device 21.

The M2M service PF 27 acquires an event notification message from the M2M device 21 by using an interface or an API provided between the M2M device 21 and the M2M service PF 27.

As explained above, by using the mobile communication system according to the fourth exemplary embodiment of the present invention, the M2M device 21 can transmit an event notification message directly to the M2M service PF 27. This makes it possible to omit some of the processing steps performed in the mobile communication system and thereby simplify the processes performed in the mobile communication system.

### (Fifth exemplary embodiment)

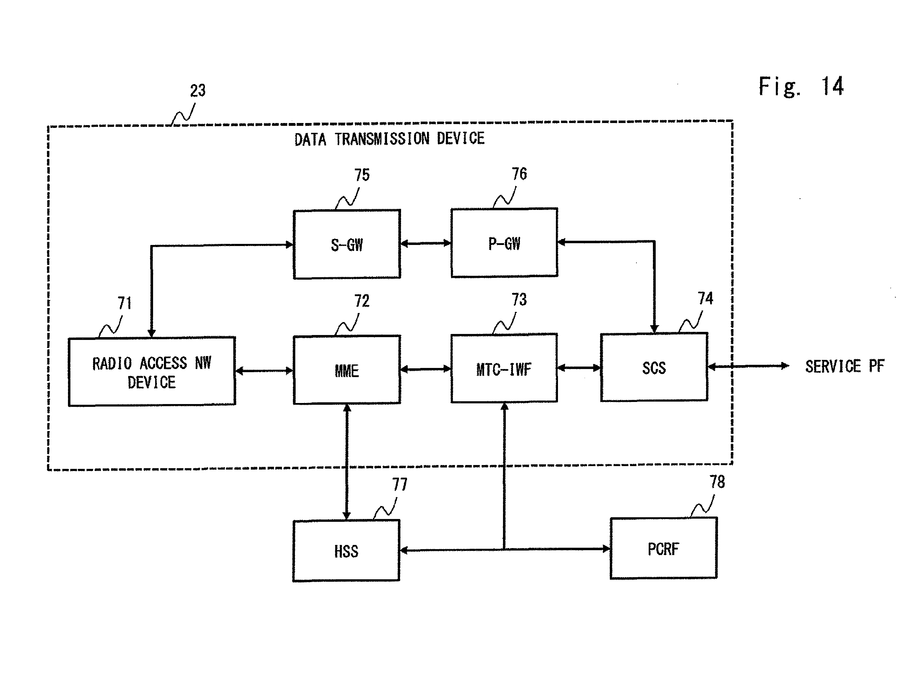

Next, a configuration example of a data transmission device 23 according to a fifth exemplary embodiment of the present invention is explained with reference to Fig. 14. In this figure, an example where a mobile communication carrier uses a mobile communication network specified in the 3GPP (3rd Generation Partnership Project) is explained. In this figure, the functions corresponding to the data transmission device 23 are implemented by using a radio access NW device 71, an MME (Mobility Management Entity) 72, an MTC (Machine Type Communication)-IWF (Inter Working Function) 73, an SCS (Service Capability Server) 74, an S-GW (Serving Gateway) 75, and a P-GW (Packet Data Network Gateway) 76.

Further, an HSS (Home Subscriber Server) 77 and a PCRF (Policy and Charging Rules Function) 78 are also communication nodes specified in the 3GPP, and correspond to the NW parameter management device 25.

The radio access NW device 71 may be a base station. Further, the radio access NW device 71 may be an eNB, which is a base station in the case where the LTE (Long Term Evolution) is used as a radio system. The MME 72 mainly manages the movement of the M2M device 21. The SCS 74 is a communication node provided for communicating with the M2M service PF 27 and acquires information about a characteristic change from the M2M service PF 27. The SCS 74 outputs the information about the characteristic change to the MTC-IWF 73. A Tsp interface specified in the 3GPP is used as an interface between the MTC-IWF 73 and the SCS 74. A Diameter protocol is used for the Tsp interface.

The S-GW 75 and the P-GW 76 transmit/receive user data such as audio data or image data transmitted from the M2M device 21. The S-GW 75 and the P-GW 76 relay user data transmitted through the wireless access NW device 71 and output it to the SCS 74.

The MTC-IWF 73 changes a NW parameter related to the M2M device 21 managed in the HSS 77 or the PCRF 78 based on the information about the characteristic change output from the SCS 74. Further, when the NW parameter related to the M2M device 21 is managed in the MME 72, the MTC-IWF 73 changes the NW parameter related to the M2M device 21 managed in the MME 72. Alternatively, the MTC-IWF 73 may change a NW parameter related to the M2M device 21 managed in the S-GW 75, the P-GW 76, and the eNB, which is the radio access NW device 71, based on the information about the characteristic change output from the SCS 74. A case where a Paging Area (or a Tracking Area), a Tracking Area Update Timer, an Inactivity Timer, a Connection keep time, a DRX Timer, a Backoff Timer, a communication policy, a QCI (QoS), a band guarantee parameter, and so on are used as NW parameters is explained hereinafter in a concrete manner.

For example, when the MTC-IWF 73 changes a Paging Area (or a Tracking Area), the MTC-IWF 73 outputs a change instruction message to the HSS 77 or the MME 72. Further, when the MTC-IWF 73 changes a Tracking Area Update Timer, the MTC-IWF 73 outputs a change instruction message to the HSS 77. When the MME 772 manages the Tracking Area Update Timer, the MTC-IWF 73 may also output a change instruction message about the Tracking Area Update Timer to the MME 72.

When the MTC-IWF 73 changes an Inactivity Timer, a Connection keep time, or a DRX Timer, the MTC-IWF 73 outputs a change instruction message to the HSS 77 or the MME 72. Further, the MTC-IWF 73 outputs a change instruction message to the eNB in order to change a parameter related to an Inactivity Timer or the like held by the eNB.

When the MTC-IWF 73 changes a Backoff Timer, the MTC-IWF 73 outputs a change instruction message to the MME 72. When the MTC-IWF 73 changes a communication policy, a QCI (QoS), a band guarantee parameter, or the like, the MTC-IWF 73 outputs a change instruction message to the PCRF 78, the S-GW 75, and the P-GW 76. Further, the MTC-IWF 73 can change the output destination of a change instruction message as appropriate according to a change in a device that manages a NW parameter or an introduction of a new device.

As explained above, by using the mobile communication system according to the fifth exemplary embodiment of the present invention, a NW parameter managed in the HSS 75 or the MME 72 can be changed to an appropriate value based on information about a characteristic change of the M2M device 21 notified from the M2M service PF 27 even in the case where a network specified in the 3GPP is used.

Further, the network shown in Fig. 14 is explained by using a configuration example of an EPC (Evolved Packet Core) used in the LTE. However, in the case of the UMTS, a network may also be constructed based on a concept similar to that of the LTE example. For example, in the case of the UMTS, the operation performed by the MME 72 shown in Fig. 14 may be performed by a control plane of an SGSN (Serving GPRS Support Node). The operation of the HSS 77 may be performed by an HLR (Home Location Register). The operation of the S-GW 75 may be performed by a user plane function of the SGSN. The operation of the P-GW 76 may be performed by a GGSN (Gateway GPRS Support Node). Further, the operation of the radio access NW device 71 may be performed by an RNC (Radio Network Controller).

Although the present invention is described as a hardware configuration in the above-described exemplary embodiments, the present invention is not limited to the hardware configurations. In the present invention, the processes in the data transmission device and the NW parameter management device shown in Figs. 10 and 13 can also be implemented by causing a CPU (Central Processing Unit) to execute a computer program.

In the above-described examples, the program can be stored in various types of non-transitory computer readable media and thereby supplied to computers. The non-transitory computer readable media includes various types of tangible storage media. Examples of the non-transitory computer readable media include a magnetic recording medium (such as a flexible disk, a magnetic tape, and a hard disk drive), a magneto-optic recording medium (such as a magneto-optic disk), a CD-ROM (Read Only Memory), a CD-R, and a CD-R/W, and a semiconductor memory (such as a mask ROM, a PROM (Programmable ROM), an EPROM (Erasable PROM), a flash ROM, and a RAM (Random Access Memory)). Further, the program can be supplied to computers by using various types of transitory computer readable media. Examples of the transitory computer readable media include an electrical signal, an optical signal, and an electromagnetic wave. The transitory computer readable media can be used to supply programs to computer through a wire communication path such as an electrical wire and an optical fiber, or wireless communication path.

Note that the invention is not limited to the above-described exemplary embodiments and various changes may be made therein without departing from the spirit and scope of the present invention.

Although the present invention is explained above with reference to exemplary embodiments, the present invention is not limited to the above-described exemplary embodiments. Various modifications that can be understood by those skilled in the art can be made to the configuration and details of the present invention within the scope of the invention.

This application is based upon and claims the benefit of priority from Japanese patent applications No. 2013-598, filed on January 7, 2013, the disclosure of which is incorporated herein in its entirety by reference.

### Reference Signs List

- 11: MOBILE COMMUNICATION DEVICE
- 12: NETWORK OPERATOR DEVICE
- 13: SERVICE PLATFORM
- 21: M2M DEVICE
- 23: DATA TRANSMISSION DEVICE
- 25: NW PARAMETER MANAGEMENT DEVICE
- 27: M2M SERVICE PF
- 29: APPLICATION SERVER
- 31: SENSOR
- 32: COMMUNICATION UNIT
- 41: SERVICE PF COMMUNICATION UNIT
- 42: NW PARAMETER CONTROL UNIT
- 51: EVENT INFORMATION ACQUISITION UNIT
- 52: CHARACTERISTIC CHANGE DETECTION UNIT
- 53: APPLICATION SERVER COMMUNICATION UNIT
- 54: DATA TRANSMISSION DEVICE COMMUNICATION UNIT
- 61: EVENT INFORMATION ACQUISITION UNIT
- 71: RADIO ACCESS NW DEVICE
- 72: MME
- 73: MTC-IWF
- 74: SCS
- 75: S-GW
- 76: P-GW
- 77: HSS
- 78: PCRF

## Claims

1. A mobile communication system comprising:
a network operator device disposed in a mobile communication network managed by a mobile communication carrier; and
a service platform that provides an application service to a mobile communication device, the mobile communication device being configured to perform communication through the mobile communication network, wherein
the service platform transmits a characteristic change of the mobile communication device to the network operator device, the characteristic change being related to an event notification transmitted from the mobile communication device, and
the network operator device changes a network parameter associated with the mobile communication device according to the characteristic change of the mobile communication device transmitted from the service platform.

2. The mobile communication system according to Claim 1, wherein the service platform receives the event notification from an M2M device, the M2M device being configured to autonomously transmit data without requiring a user operation.

3. The mobile communication system according to Claim 1 or 2, wherein the service platform is disposed in a network different from the mobile communication network.

4. The mobile communication system according to any one of Claims 1 to 3, wherein the event notification is information indicating a state change of the mobile communication device.

5. The mobile communication system according to Claim 4, wherein the information indicating the state change of the mobile communication device is a start-up state of an engine in a case where the mobile communication device is a car.

6. The mobile communication system according to Claim 4 or 5, wherein the information indicating the state change of the mobile communication device is sensor information detected in a sensor included in the mobile communication device.

7. The mobile communication system according to any one of Claims 1 to 6, wherein the characteristic change is a change in a movement characteristic or a communication characteristic of the mobile communication device.

8. The mobile communication system according to Claim 7, wherein the movement characteristic includes at least one of information about whether or not the mobile communication device is moving, information about a moving speed of the mobile communication device, and a moving direction of the mobile communication device.

9. The mobile communication system according to Claim 7 or 8, wherein the communication characteristic includes at least one of information about a communication interval of the mobile communication device and information about a data amount transmitted by the mobile communication device.

10. The mobile communication system according to any one of Claims 1 to 9, wherein the network parameter includes at least one of information about an area where the mobile communication device is called when an incoming-call process for the mobile communication device is performed and information about a timing at which the mobile communication device is disconnected from the mobile communication network.

11. The mobile communication system according to any one of Claims 1 to 10, wherein the service platform receives an event notification transmitted from the mobile communication device through an application server.

12. A service platform that provides an application service to a mobile communication device connected to a mobile communication network managed by a mobile communication carrier, comprising:
event information acquisition means for receiving an event notification transmitted from the mobile communication device; and
characteristic change detection means for transmitting a characteristic change of the mobile communication device to a network operator device disposed in the mobile communication network, the characteristic change being related to the event notification transmitted from the mobile communication device.

13. The service platform according to Claim 12, wherein the event information acquisition means receives the event notification from an M2M device, the M2M device being configured to autonomously transmit data without requiring a user operation.

14. The service platform according to Claim 12 or 13, disposed in a network different from the mobile communication network.

15. The service platform according to any one of Claims 12 to 14, wherein the event notification is information indicating a state change of the mobile communication device.

16. The service platform according to Claim 15, wherein the information indicating the state change of the mobile communication device is a start-up state of an engine in a case where the mobile communication device is a car.

17. The service platform according to Claim 15 or 16, wherein the information indicating the state change of the mobile communication device is sensor information detected in a sensor included in the mobile communication device.

18. The service platform according to any one of Claims 12 to 17, wherein the characteristic change is a change in a movement characteristic or a communication characteristic of the mobile communication device.

19. The service platform according to Claim 18, wherein the movement characteristic includes at least one of information about whether or not the mobile communication device is moving, information about a moving speed of the mobile communication device, and a moving direction of the mobile communication device.

20. The service platform according to Claim 18 or 19, wherein the communication characteristic includes at least one of information about a communication interval of the mobile communication device and information about a data amount transmitted by the mobile communication device.

21. The service platform according to any one of Claims 12 to 20, wherein the event information acquisition means receives an event notification transmitted from the mobile communication device through an application server.

22. A network operator device that communicates with a service platform, the service platform being configured to provide an application service to a mobile communication device connected to a mobile communication network managed by a mobile communication carrier, the network operator device comprising:
communication means for receiving a characteristic change of the mobile communication device from the service platform, the characteristic change being related to an event notification transmitted from the mobile communication device; and
network parameter control means for changing a network parameter associated with the mobile communication device according to the characteristic change of the mobile communication device transmitted from the service platform.

23. The network operator device according to Claim 22, wherein the network parameter control means transmits a message for instructing a network parameter management device to change the network parameter, the network parameter management device being configured to manage the network parameter.

24. The network operator device according to Claim 23, wherein the network parameter includes at least one of information about an area where the mobile communication device is called when an incoming-call process for the mobile communication device is performed and information about a timing at which the mobile communication device is disconnected from the mobile communication network.

25. A mobile communication device configured to transmits an event notification related to a characteristic change to a service platform that provides an application service or an application server when the mobile communication device detects a state change in the mobile communication device itself, the characteristic change being used for changing a network parameter of the mobile communication device itself in a network operator device disposed in a mobile communication network.

26. A network parameter control method comprising:
receiving an event notification transmitted from a mobile communication device belonging to a mobile communication network managed by a mobile communication carrier;
transmitting a characteristic change of the mobile communication device related to the event notification; and
changing a network parameter associated with the mobile communication device according to the characteristic change of the mobile communication device.

27. A non-transitory computer readable medium storing a program for execution by a computer that provides an application service to a mobile communication device connected to a mobile communication network managed by a mobile communication carrier, the program causing the computer to execute:
a step for receiving an event notification transmitted from the communication device; and
a step for transmitting a characteristic change of the mobile communication device to a network operator device disposed in the mobile communication network, the characteristic change being related to the event notification transmitted from the mobile communication device.

28. A non-transitory computer readable medium storing a program for execution by a computer that communicates with a service platform, the service platform being configured to provide an application service to a mobile communication device connected to a mobile communication network managed by a mobile communication carrier, the program causing the computer to execute:
a step for receiving a characteristic change of the mobile communication device from the service platform, the characteristic change being related to an event notification transmitted from the mobile communication device; and
a step for changing a network parameter associated with the mobile communication device according to a characteristic change of the mobile communication device transmitted from the service platform.
